(19) **Europäisches Patentamt**
**European Patent Office**
**Office européen des brevets**

(11) **EP 3 131 063 A1**

(12) **EUROPEAN PATENT APPLICATION**

(43) Date of publication:
**15.02.2017 Bulletin 2017/07**

(51) Int Cl.:
**G06T 15/50** *(2011.01)* **G06T 15/80** *(2011.01)*

(21) Application number: **15306284.9**

(22) Date of filing: **11.08.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• LECOCQ, Pascal
  35576 Cesson-Sévigné (FR)
• MARVIE, Jean-Eudes
  35576 Cesson-Sévigné (FR)
• TARIOLLE, François-Louis
  35576 Cesson-sévigné (FR)

(74) Representative: **Huchet, Anne**
**TECHNICOLOR**
**1-5, rue Jeanne d'Arc**
**92130 Issy-les-Moulineaux (FR)**

(54) **METHOD AND APPARATUS FOR REAL-TIME RENDERING OF IMAGES OF SPECULAR SURFACES**

(57) A method for real-time rendering of illuminated specular surfaces commences by establishing a viewing reflection vector $\vec{R}$ associated with an image to be rendered. For each edge $U_i$, the local radiance is established by (a) establishing a normalized projection of a single point $S1$ of the viewing reflection *vector R* onto a plane defined by edge $U_iU_{i+1}$; (b) determining if $S$ lies inside $U_iU_{i+1}$, and if so, (c) performing a halfway transform of $U_i$, $S$ and $U_{i+1}$; and (d) performing an edge integral is performed on $U_i$, $S$ and $S$, $U_{i+1}$ to establish radiance. An iteration is performed over all edges and the local radiance for all edges is summed. The specular surfaces are rendered in accordance with the established radiance.

FIG. 7

EP 3 131 063 A1

**Description**

TECHNICAL FIELD

This invention relates to a technique with rendering images of specular surfaces,

BACKGROUND ART

Physical-based lighting of specular surfaces with area light constitutes a challenging task in Computer Graphics. Area lights provide more natural lighting, giving VFX/Game artists finer control of light balancing within a scene to reduce contrast or match one or more artistic criteria. Most real-time rendering solutions involving area lights and specular surfaces make crude approximation of radiance to achieve real-time performances. Such solutions are restricted to simple area light geometries (sphere, disk or rectangle) with strong assumptions on visibility and most of all, they are usually limited to the Phong model for specular surfaces.

Accurate real-time rendering of specular surfaces incurs difficulty resides because no practical solution exists for evaluating surface integrals except using computationally intensive Monte Carlo methods. Recent techniques like the most representative point approach alleviate this problem but trade-off accuracy to achieve real-time performance and theses techniques remain valid only for the Phong model for specular surfaces. James Arvo, in his paper "Applications of Irradiance Tensors to the Simulation of Non-Lambertian Phenomena", published in Computer Graphics Proceedings, Annual Conference Series, ACM SIGGRAPH, 1995, has developed an analytic solution using contour integration that considers polygonal light sources. Unfortunately, this solution remains impracticable for use on Graphical Processing Units (GPUs) because the solution requires evaluation of a time consuming loop. Moreover, this solution is restricted to the Phong model for specular surfaces.

Thus, a need exists for a technique that accurately renders specular surfaces that overcomes the aforementioned disadvantages of the prior art, and specifically, the constraint of the Phong model for specular surfaces.

BRIEF SUMMARY

A method for real-time rendering of illuminated specular surfaces commences by establishing a viewing reflection vector $\vec{R}$ associated with an image to be rendered. For each edge $U_i$, the local radiance is established by (a) establishing a normalized projection of a single point $\vec{S}$ of the viewing reflection vector $R$ onto a plane defined by edge $U_iU_{i+1}$; (b) determining if $S$ lies inside $U_iU_{i+1}$, and if so, (c) performing a halfway transform of $U_i$, $S$ and $U_{i+1}$; and (d) performing an edge integral is performed on $U_i$, $S$ and $S$, $U_{i+1}$ to establish radiance. An iteration is performed over all edges and the local radiance for all edges is summed. The specular surfaces are rendered in accordance with the established radiance.

In accordance with another aspect of the present principles, wherein if $S$ does not lie inside $U_iU_{i+1}$ a halfway transform of $U_i$ and $U_{i+1}$ is performed and the edge integral $U_i$, $U_{i+1}$ is evaluated in place of performing a halfway transform of $U_i$, $S$ and $U_{i+1}$; and performing an edge integral is performed on $U_i$, $S$ and $S$, $U_{i+1}$2.

In accordance with yet another aspect of the present principles, the halfway transform yields a stationary inflection aligned with a viewing direction.

In accordance with yet another aspect of the present principles, an apparatus for real-time rendering of illuminated specular surfaces includes a memory for storing data and program instructions. A graphical circuitry (606) is configured to (1) establish a viewing reflection vector $\vec{R}$ associated with an image to be rendered; (2) for each edge $U_i$, establish a local radiance by (a) establishing a normalized pro of a single point $\vec{S}$ of the viewing reflection vector $R$ onto a plane defined by edge $U_iU_{i+1}$; (b) determine if $S$ lies inside $U_iU_{i+1}$, (706, 708) and if so, (c) perform a halfway transform of $U_i$, $S$ and $U_{i+1}$; and (d) perform an edge integral is performed on $U_i$, $S$ and $S$, $U_{i+1}$ to establish radiance; (3) iterate over all edges; (4) sum the local radiance for all edges; and (5) render the specular surfaces in accordance with the established radiance. A microprocessor controls the graphical circuitry and a bus (602) interconnects the memory, graphical circuitry and the microprocessor.

In accordance with yet another aspect of the present principles, the graphical circuitry of the apparatus performs a halfway transform of $U_i$ and $U_{i+1}$ and evaluate the edge integral $U_i$, $U_{i+1}$ in place of performing a halfway transform of $U_i$, $S$ and $U_{i+1}$; and performing an edge integral is performed on $U_i$, $S$ and $S$, $U_{i+1}$. if $S$ does not lie inside $U_iU_{i+1}$.

It is an object of the disclosure is to provide a technique for rendering physically plausible specular surfaces lit by area lights.

It is another object of the invention to provide a technique for rendering a physically plausible specular surface that makes use of a micro-facet model.

It is another object of the invention to provide a technique for rendering physically plausible specular surfaces that incurs a small computational overhead;

It is another object of the invention to provide a technique for rendering physically plausible specular surfaces that capable of implementation on parallel architectures including graphics hardware and game engines.

It is another object of the invention to provide a technique for rendering physically plausible specular surfaces well suited for fast, real-time rendering.

BRIEF DESCRIPTION OF THE DRAWINGS

FIGURE 1 depicts a ray diagram illustrating the Phong model for specular surfaces;

FIGURE 2 depicts a ray diagram illustrating the Blinn-Phong model for specular surfaces;

FIGURE 3 depicts a plan view of area light projected on to a hemisphere;

FIGURE 4 depicts the plan view of FIG. 3 illustrating a split point $\vec{S}$ along a reflection vector $\vec{R}$ in accordance with the present principles;

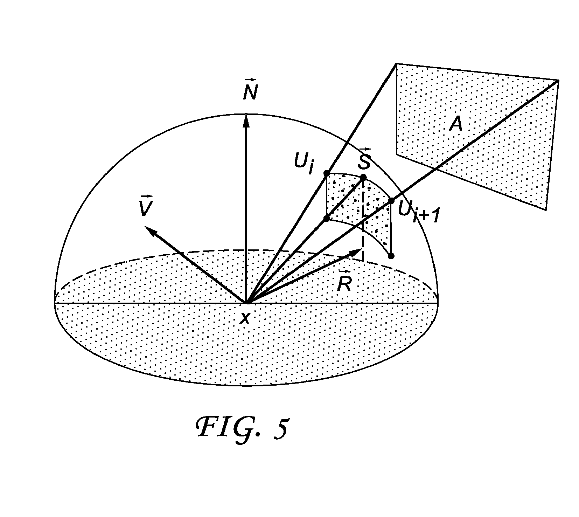

FIGURE 5 depicts a hemispherical ray diagram illustrating the technique for establishing the split point $\vec{S}$ in accordance with the present principles;

FIGURE 6 depicts a blocks schematic diagram of an apparatus for carrying out rendering of the present principles; and

FIGURE 7 depicts a flow chart illustrating the steps of a method for rendering in accordance with the present principles.

DETAILED DESCRIPTION

As described in detail hereinafter, improved rendering of images having specular surfaces occurs by a technique according to the present principles that establishes radiance by the use of the contour integration, as descried in the aforementioned Arvo paper and makes use of fast approximations, as taught in the aforementioned EP Patent Application 15305229.5. Further, the rendering method makes use of the halfway transform to represent physically plausible specular surfaces. The rendering technique of the present principles considers specular surfaces described by a micro-facet model (Blinn-Phong) and polygonal area light sources.

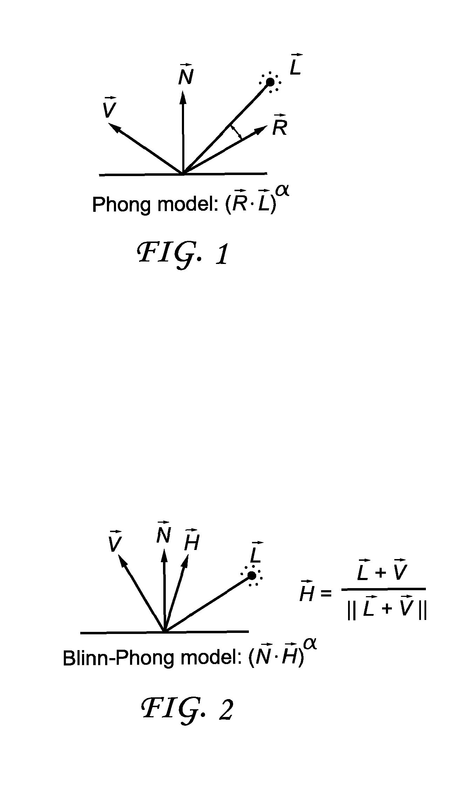

To appreciate the rendering method of the present principles, refer to FIG. 1, which depicts a ray diagram illustrating the Phong model for specular surfaces and FIG. 2, which depicts a ray diagram illustrating the Blinn-Phong model for specular surfaces. In each figure, the vector $\vec{V}$ defines the viewing direction, $\vec{R}$ represents the reflected view vector against the surface with a normal $\vec{N}$, and $\vec{L}$ defines the incoming light direction. In FIG. 2, the vector $\vec{H}$ corresponds to the halfway vector defined as follows:

$$\vec{H} = \frac{\vec{L} + \vec{V}}{\|\vec{L} + \vec{V}\|}$$

One approach overcoming the constraint of the Phong model would be to apply the halfway transformation to the vertices on the area light only and then apply Arvo's formulation around the normal axis. Unfortunately, the half vector transformation is not affine, which can introduce distortions. Regularly sampling edge points to follow the distortion will reduce this problem, but this approach requires a high sampling count to yield acceptable results, which is time consuming.

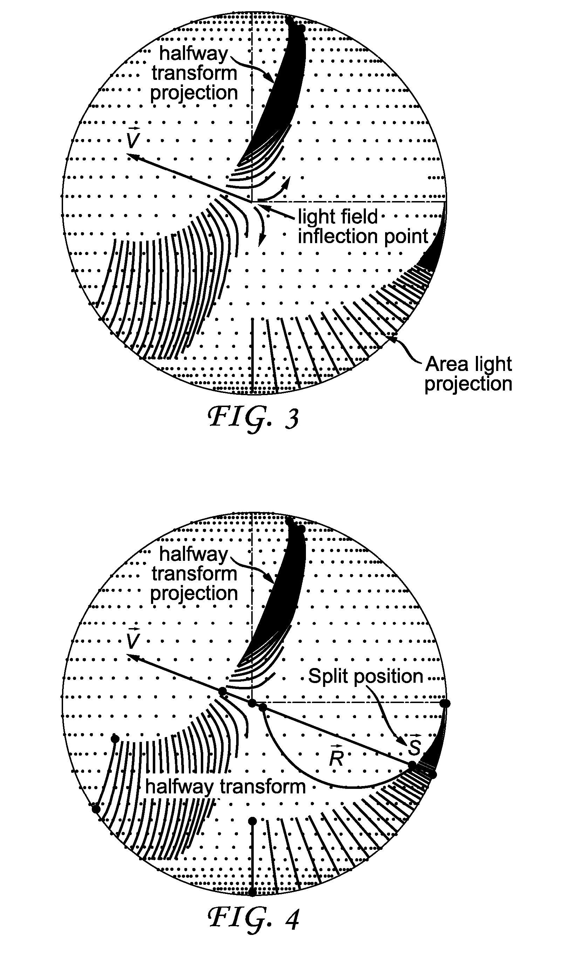

To overcome the deficiencies of the prior art described above, the rendering technique of the present principles makes use of an edge splitting strategy to approximate microfacet specular radiance. To understand the edge splitting approach to establish radiance in accordance with the present principles, refer to FIG. 3, which depicts a plan view of area light projected on to a hemisphere and FIGURE 4 depicts the plan view of FIG. 3 after a halfway transform. FIG. 3 exhibits an inflection area perfectly aligned with the viewing direction. Now, consider an edge split from a single point with a location $\vec{S}$ driven by the reflection vector $\vec{R}$. Using this split enables a simple and fast edge splitting strategy for establishing radiance. A careful observation of FIG. 3 shows that the halfway transform exhibits a stationary inflection of the area light field. This inflection enjoys substantially perfectly alignment with the viewing direction and represents a good splitting position as depicted in FIG. 4. Note that the points lying in the plane formed by $\vec{V}$ and the viewing reflection $\vec{R}$ vector stay aligned with $\vec{V}$ after the half transform.

FIGURE 4 graphically a ray diagram that illustrates the technique of the present principles to locating the position of the splitting point:

The technique entails the following:

1. Compute the viewing reflection vector $\vec{R}$
2. Iterate over light edges
3. For each edge $U_i U_{i+1}$, Consider the normalized projection $\vec{S}$ of $\vec{R}$ onto the plane defined by the edge $U_i U_{i+1}$
4. If $S$ lies inside $U_i U_{i+1}$ consider $S$ as a splitting point.

    a. perform the halfway transform of $U_i$, $S$ and $U_{i+1}$
    b. evaluate the edge integral on $U_i$, $S$ and $S$, $U_{i+1}$ in accordance with the teachings of EP Patent Application 15305229.5, and then add the results to the local radiance to approximate the microfacet specular radiance.

5. Otherwise, do not split

    a. perform the halfway transform of $U_i$ and $U_{i+1}$
    b. evaluate the edge integral $U_i$, $U_{i+1}$ using the teachings of EP Patent Application 15305229.5, add the result to the local radiance to approximate the microfacet specular radiance.

6. Return the local radiance at iteration end

After approximating the microfacet specular radiance, rendering occurs.

A clear advantage of the above-described procedure is that the edge splitting is not systematic and the computational overhead is thus limited. In this regard, the parallel architecture present in modern GPUs (Graphic Processor Units) can advantageously serve to evaluate the specular area lighting for simultaneous pixels. The whole solution can be readily implemented in a fragment shader (e.g., GLSL, HLSL etc.) or any language with GPU parallel computing capabilities (e.g., Compute Shader, CUDA, OpenCL, etc.).

Establishing the radiance can occur as follows in accordance with the teachings of EP Patent Application 15305229.5 summarized hereinafter. The reflectance properties of the lighted surface at a point M, depending on the surface material, are represented by a BRDF function (bidirectional reflection distribution function) noted $f_r (M, \vec{\omega}_i, \vec{\omega}_o)$. As well known to a person skilled in the art, a BRDF function relates radiance incident at a point on a surface to radiance reflected from that point. The radiance $L(M, \vec{\omega}_o)$ scattered at point $M$ towards an observer (color perceived by the eye) is then defined by a hemispherical integral over the solid angle $\Omega$ $(A)$ sustained by the light source surface A:

$$L(M, \vec{\omega_o}) = \int_{\Omega(A)} L_A(M, \vec{\omega_i}) \; f_r (M, \vec{\omega_i}, \vec{\omega_o}) \; (\vec{\omega_i} . \vec{v}) \; d\omega_i \qquad (1)$$

where $d\omega_i$ represents a differential variation of the solid angle.

In EP Patent Application 15305229.5, a Phong distribution model can define the BRDF function. However, in accordance with the present principles, the Blinn-Phong model can serve to define the BRDF function.

The following discussion considers only the specular component since that component remains most relevant to the glossy (or specular) part of the radiation reflected by the surface. In particular situations, the considered surface is itself glossy (or nearly specular), so that the radiation is identified with its glossy part for the computations. The glossy component of the representation accounts for the fact that the considered surface is not perfectly smooth, so that reflection of light does not obey Snell's law. Instead, the related reflected light has a distribution about a preferred direction of specular reflected light. The concentration of that distribution is expressed by the shininess coefficient $n$, also called Phong or specular-reflection exponent, which controls the glossiness.

By noting $\rho_s$ a specular reflectivity, which provides a ratio of reflection of the specular term of incoming light, and supposing that this term is constant at point $M$ (at least for a given color channel) as usually done in the Phong model (or in the Blinn-Phong model), two representations are notably relevant to the glossy part:

$$f_{r1} (M, \vec{\omega_i}, \vec{\omega_o}) = \rho_s (M) \frac{n+1}{2\pi} \frac{(\vec{\omega_i}.\vec{r})^n}{(\vec{\omega_i}.\vec{v})} \qquad (2)$$

$$f_{r2} (M, \vec{\omega_i}, \vec{\omega_o}) = \rho_s (M) \frac{n+2}{2\pi} (\vec{\omega_i}.\vec{r})^n \qquad (3)$$

The first of those representations, corresponding to equation (2), is relevant to a one-axis moment Phong distribution model and is described notably by Robert R. Lewis in "Making Shaders More Physically Plausible", in Fourth Eurographics Workshop on Rendering, pp. 47-62, 1994. The second representation, associated with equation (3), is relevant to a double-axis moment and is described notably by Eric P. Lafortune and Yves D. Willems in "Using the Modified Phong Reflectance Model for Physically Based rendering". Technical Report RP-CW-197, 1994.

More generally, in variant implementations, other BRDF representations of the specular component besides the Phong distribution model can be used. This applies particularly to a radiation having a distribution behavior around an oriented axis, and controlled by a cosine function raised by a shininess coefficient $n$, the cosine being given by the angle between the oriented axis and a viewing direction.

Consider a light source surface A being polygonal and having $m$ edges, the 2D surface integral of equation (1) can be expressed as a summation of a 1D contour integral around the edges 210. This is based on the Stokes theorem and on the developments by Arvo in the above-cited PhD thesis and article.

Accordingly, for each of the oriented $m$ edges, such as $U_iU_{i+1}$, a unit vector s can be defined, pointing from point $M$ to a first vertex $U_i$ of edge $U_iU_{i+1}$, as well as a unit vector $\vec{t}$, orthogonal to vector $\vec{s}$ and in the plane of the edge $U_iU_{i+1}$, so that $(\vec{s}, \vec{t})$ constitutes an orthonormal basis. This is used for defining for edge $U_iU_{i+1}$, the parameters (keeping in mind that $\vec{s}$ and $\vec{t}$ depend on the considered edge:

$$a_i = \vec{r}.\vec{s}, \; b_i = \vec{r}.\vec{t}, \; c_i = \sqrt{a_j{}^2 + b_j{}^2}, \; \delta_i = \arctan\left(\frac{b_j}{a_j}\right) \qquad (4)$$

Further, an edge aperture $\Phi i$ is defined as the angle opening corresponding to edge $U_iU_{i+1}$, as projected onto a hemisphere around point $M$ and direction $\vec{r}$. Also, unit normal vectors $\vec{n_j}$ are defined as normal and external to the boundary of source surface $A$, i.e. to the edges and tangent to the hemisphere.

Following Arvo's developments cited above, the radiance $L_A(M,\vec{\omega_\tau})$ of a light source at point $M$ being represented as independent of direction $\vec{\omega_\tau}$ (and noted $L_A(M)$ for sake of convenience) - which amounts to considering it as constant over the light source, the radiance $L(M,\vec{\omega_o})$ is given for the first BRDF Phong representation associated with equation (2) by:

$$L(M, \vec{\omega_o}) = \frac{\rho_S(M)\, L_A(M)}{2\pi} \begin{cases} \sum_{j=1}^{m}(\vec{n_j}.\vec{r})\, F(\Phi_j, a_j, b_j, n-1) & \text{if } n \text{ odd} \\ \Omega(A) + \sum_{j=1}^{m}(\vec{n_j}.\vec{r})\, F(\Phi_j, a_j, b_j, n-1) & \text{if } n \text{ even} \end{cases}$$

$$(5)$$

with:

$$F(x, a, b, n) = \begin{cases} \sum_{k=0}^{\frac{n-1}{2}} \int_0^x (a\cos\varphi + b\sin\varphi)^{2k+1}\, d\varphi & \text{if } n \text{ odd} \\ \sum_{k=0}^{\frac{n}{2}} \int_0^x (a\cos\varphi + b\sin\varphi)^{2k}\, d\varphi & \text{if } n \text{ even} \end{cases} \qquad (6)$$

Following the harmonic addition theorem, the trigonometric expressions can be simplified as:

$$a\cos\varphi + b\sin\varphi = c\cos(\varphi - \delta) \qquad (7)$$

giving:

$$F(x, a, b, n) = G(x, c, \delta, n)$$

$$G(x, c, \delta, n) = \begin{cases} \sum_{k=0}^{\frac{n-1}{2}} \int_0^x c^{2k+1}(\cos(\phi - \delta))^{2k+1}\, d\phi & \text{if } n \text{ odd} \\ \sum_{k=0}^{\frac{n}{2}} \int_0^x c^{2k}(\cos(\phi - \delta))^{2k}\, d\phi & \text{if } n \text{ even} \end{cases} \qquad (8)$$

For sake of conciseness, a function $f(\phi, c, n)$ and a parameter $q$ are introduced so that:

$$f(\phi, c, n) = \begin{cases} c\,cos\phi & \text{if } n \text{ odd} \\ 1.0 & \text{if } n \text{ even} \end{cases} \qquad q = \begin{cases} \dfrac{n-1}{2} & \text{if } n \text{ odd} \\ \dfrac{n}{2} & \text{if } n \text{ even} \end{cases} \qquad (9)$$

Noting that the sum operator and integral can be inverted in formulae (8), and that geometric series are thereby obtained, the function G is worth:

$$G(x, c, \delta, n) = \int_{0}^{x} f(\phi - \delta, c, n)\, \frac{(c\cos(\phi-\delta))^{2q+2}-1}{(c\cos(\phi-\delta))^2-1}\, d\varphi$$

By moving δ in the integration range, function *G* can thus be written:

$$G(x, c, \delta, n) = \int_{-\delta}^{x-\delta} I(\varphi, c, n)\, d\phi \qquad (10)$$

with the integrand:

$$I(\phi, c, n) = \frac{(c\cos\phi)^{n+2}-f(\phi,c,n)}{(c\cos\phi)^2-1} \qquad (11)$$

The integrand function *I* is approximated as described below, thanks to dedicated peak-shape functions having known antiderivatives. In best implementations, integrand *I* can thereby be evaluated with high accuracy and subject to few parameterization operations.

Parameter *s* is given by:

$$s = \begin{cases} \dfrac{c^{n+2}-c}{c^2-1} & \text{if } n \text{ odd} \\ \dfrac{c^{n+2}-1}{c^2-1} & \text{if } n \text{ even} \end{cases} \qquad (12)$$

From the knowledge of *s*, normalized functions noted $\bar{I}$ can be induced from the integrand function *I*, ranging between 0 and 1, Those are obtained by preliminarily shifting down the integrand function *I* for even *n*, and by dividing it by parameter *s* (scaling) for even and odd values of *n*. Another additional parameter is the half-width $x_\omega$, for which the integrand function *I* is worth half of its maximum value *s*. The values of half-width $x_\omega$, for even *n* and odd *n* are given by the positive value of ϕ for which the integrand function *I* is worth half its maximum value *s*.

The equation $I(\phi, c, n) = s/2$ having no analytical solution, the value of parameter $x_\omega$, is approximated in the present exemplary implementation by formulae giving approximating values $\widetilde{x_\omega}$ as follows:

$$\widetilde{x_\omega}(c, n) = \begin{cases} \dfrac{\pi}{3}\sqrt{1-(c-\dfrac{c}{n})^2} & \text{if } n \text{ odd} \\ \dfrac{\pi}{4}\left(1-\left(c-\dfrac{c}{n-1}\right)^{2.5}\right)^{0.45} & \text{if } n \text{ even} \end{cases} \qquad (13)$$

The relevance of that approximation proves to rely on the ellipse shape of the half width parameter $x_\omega$ when *n* tends to infinity, with $x_\omega$ converging to respectively π/3 and π/4 *n* odd and even when c tends to 0, and $x_\omega$ converging to 0 when c tends to 1 and *n* to infinity.

The approximation described above is quite accurate for high values of *n* exponent and average for low values. Advantageously, however, a low precision estimation is considered as sufficient for the latter, while a high level of accuracy is applied for the former. Indeed, for low values of $n$, smooth peak curves with large width are obtained, so that small variations of $x_\omega$ correspond to small variations of integrand function $I$. By contrast, for high values of $n$, the slope becomes very high and a small variation of $x_\omega$ can possibly correspond to a huge variation of integrand function $I$.

Those computed parameters $c$, $s$ and $x_\omega$ are used for specifying appropriate peak-shape functions, which are exploited for constructing an approximation $\tilde{I}(\phi,c,n)$ of the integrand function $I(\phi,c,n)$ as explained hereinafter. The peak-shape functions, which like $I$ have dependencies on $\phi$, $c$ and $n$, are in a generic way noted $P(\phi,c,n)$.

The peak-shape functions are determined through the combination of an upstream selection of the approximation method and through computations of current parameters that depend on the specific configuration situation (geometry, light behavior of lightened surfaces, positioning of the considered point with respect to the considered area source lights, viewing direction, etc.)

Two families of implementations with peak-shape functions are described below for sake of illustration: a sophisticated one and a simpler one. The choice between both relies on a trade-off between computation costs and estimation accuracy. In what follows, the considered functions are symmetric.

For the sophisticated implementations, a triple peak-shape function $Q(\phi,c,n)$ is derived from a single normalized peak-shape function $P(\phi,c,n)$ so as to be used in the approximations. That triple peak-shape function $Q(\phi,c,n)$ is obtained by constructing a linear function of the same peak-shape function $P(\phi,c,n)$ taken as such, $\pi$-downward translated to $P(\phi+\pi, c,n)$ and $\pi$-upwards translated to $P(\phi-\pi,c,n)$, the considered angle interval remaining bounded by $-\pi/2$ and $\pi/2$ (though the domain of definition is broader, and possibly unbounded). Rather surprisingly, a particularly efficient approximation function is thereby made available.

More precisely, a particularly efficient combination is determined by considering the following triple peak-shape function $Q(\phi,c,n)$:

$$Q(\phi,c,n) = \begin{cases} P(\phi,c,\ n) - P(\phi-\pi,c,\ n) - P(\phi+\pi,c,\ n) & \text{if } n \text{ odd} \\ P(\phi,c,\ n) + P(\phi-\pi,c,\ n) + P(\phi+\pi,c,\ n) & \text{if } n \text{ even} \end{cases}$$

$$(14)$$

The approximated integrand function $\tilde{I}(\phi,c,n)$ is then obtained from $Q$ by the computations of a translation factor $vShift(c,n)$ and a scaling factor $sNorm(c,n)$ - together with an intermediary factor $d(c,n)$. They are determined from the following omitting $c$ and $n$ dependencies in the functions arguments for sake of conciseness:

$$vShift = \begin{cases} -P\left(\frac{3\pi}{2}\right) & \text{if } n \text{ odd} \\ P\left(\frac{3\pi}{2}\right) + 2\,P\left(\frac{\pi}{2}\right) & \text{if } n \text{ even} \end{cases}$$

$$d = \begin{cases} 1 - 2\,P(\pi) - vShift & \text{if } n \text{ odd} \\ 1 + 2\,P(\pi) - vShift & \text{if } n \text{ even} \end{cases} \qquad (15)$$

$$sNorm = \begin{cases} \dfrac{s}{d} & \text{if } n \text{ odd} \\ \dfrac{s-1}{d} & \text{if } n \text{ even} \end{cases}$$

The expression of approximated integrand $\tilde{I}(\phi,c,n)$ is then given in function of $Q(\phi,c,n)$ by:

$$\tilde{I}(\phi,c,n) = \begin{cases} sNorm(c,n)\,(Q(\phi,c,n) - vShift(c,n)) & \text{if } n \text{ odd} \\ sNorm(c,n)\,(Q(\phi,c,n) - vShift(c,n)) + 1 & \text{if } n \text{ even} \end{cases} \qquad (16)$$

As can be checked, thanks to the choices of $sNorm$ and $vShift$, the relations below stand (omitting c and $n$ dependencies in $\tilde{I}$ arguments for sake of conciseness):

$\tilde{I}(0) = s$, $\tilde{I}(\pi\pm/2) = 0$ for $n$ odd, $\tilde{I}(\pm\pi/2) = 1$ for $n$ even.

Based on equations (10), (14) and (16), it can then be noted that an approximation $\tilde{G}(x,c,\delta,n)$ of $G(x,c,\delta,n)$ is given by (omitting $c$ and $n$ dependencies in the arguments of the right side for sake of conciseness):

$$\tilde{G}(x,c,\delta,n) =$$

$$\begin{cases} \left\{ sNorm\left(\int_{-\delta}^{x-\delta} P(\varphi) - \int_{-\delta-\pi}^{x-\delta-\pi} P(\varphi) - \int_{-\delta+\pi}^{x-\delta+\pi} P(\varphi) - x.vShift\right)\right\} & \text{if } n \text{ odd} \\ \left\{ sNorm\left(\int_{-\delta}^{x-\delta} P(\varphi) + \int_{-\delta-\pi}^{x-\delta-\pi} P(\varphi) + \int_{-\delta+\pi}^{x-\delta+\pi} P(\varphi) - x.vShift\right) + x\right\} & \text{if } n \text{ even} \end{cases} \quad (17)$$

According to the present principles, the peak-functions $P$ have a known antiderivative expression, which makes equation (17) particularly attractive for computations.

In a variant configuration, the upwards and downwards $P$ translations are different from $\pi$, advantageously between $3\pi/4$ and $3\pi/2$, and preferably larger than $\pi$.

For the simpler family of implementations, a single normalized peak-shape function $P(\phi,c,n)$ is used in the approximations. Accordingly, the approximated integrand $\tilde{I}(\phi,c,n)$ is given by:

$$\tilde{I}(\phi,c,n) = \begin{cases} sNorm(c,n)\,(P(\phi,c,n) - vShift(c,n)) & \text{if } n \text{ odd} \\ sNorm(c,n)\,(P(\phi,c,n) - vShift(c,n)) + 1 & \text{if } n \text{ even} \end{cases} \quad (18)$$

with (omitting $c$ and $n$ dependencies in arguments for sake of conciseness):

$$vShift = P\left(\frac{3\pi}{2}\right); \qquad d = 1 - vShift; \; sNorm = \begin{cases} \dfrac{s}{d} & \text{if } n \text{ odd} \\ \dfrac{s-1}{d} & \text{if } n \text{ even} \end{cases} \quad (19)$$

The selection and parameterization of appropriate normalized peak-shape functions $P(\phi,c,n)$ will now be developed, in relation with both sophisticated families and simpler families of implementations. In the following, even values of $n$ exponent are considered, though similar processes apply to odd values.

In a first selection of the peak-shape functions $P$, those are Lorentzian functions $P_L$, of the form:

$$P_L(\phi, c, n) = \frac{1}{1 + \alpha(c,n)\,\phi^2} \quad (20)$$

where is a parameter depending on c and $n$, which specifies the function $P_L$.

In an advantageous determination mode of $P_L$, the value of $I(\phi,c,n)$ at half-width $x$ is equalized with the value of $P_L$ at a shifted abscissa with respect to $x_\omega$. The offset, noted *bias*, enables to account for the operations (translation shifting, scaling, sum) applied to $P_L$ for constituting the approximated integrand $\tilde{I}(\phi,c,n)$ - formula (16) for the triple-peak function and (18) for the single-peak function. Namely:

$$P_L\left(x_\omega + bias, c, n\right) = \frac{I(x_\omega,c,n)}{s}$$

which leads to:

$$\alpha(c,n) = \frac{s - I(x_\omega,c,n)}{I(x_\omega,c,n).(x_\omega + bias)^2} \quad (21)$$

The value of *bias* differs depending on the selection of the triple-peak or single-peak formula. For the triple-peak (sophisticated solution), it appears appropriate to select the following value:

$$bias = 0.1984 \left(\exp\left(1.7\left(\left(\tfrac{4x_\omega}{\pi}\right)^3\right) - 1\right)\right) \tag{22}$$

while for the single-peak solution, the following choice proves adequate:

$$bias = 0.3225 \left(\exp\left(0.7\left(\left(\tfrac{4x_\omega}{\pi}\right)^{3.1}\right) - 1\right)\right) \tag{23}$$

The relevance of those empirical formulae for the *bias* factor is confirmed by experimental measurements.

As previously mentioned, a key aspect of the selected peak-shape functions consists in the knowledge of an analytical expression for their antiderivative. As regards the Lorentzian function of formula (20), this is given by (arguments $c$ and $n$ being omitted in functions for sake of conciseness):

$$\int P_L(\phi) = \frac{\arctan(\sqrt{\alpha}.\phi)}{\sqrt{\alpha}} \tag{24}$$

which leads notably to the following:

$$\int_{-\delta}^{x-\delta} P_L(\phi, c, n) = \frac{1}{\sqrt{\alpha}}\left(\arctan(\sqrt{\alpha}\,((x-\delta))) - \arctan(\sqrt{\alpha}\,(-\delta))\right)$$

 Having in mind that:

$$\arctan(x) - \arctan(y) = \arctan\left(\frac{x-y}{1+xy}\right)[\mathrm{mod}\ \pi]$$

this leads to the following formula:

$$\int_{-\delta}^{x-\delta} P_L(\phi) = \frac{1}{\sqrt{\alpha}}\arctan\left(\frac{\sqrt{\alpha}.x}{1+\alpha(-\delta)(x-\delta)}\right)[\mathrm{mod}\ \pi] \tag{25}$$

Note that that formula (25) involves a limited number of computations of arc tangent function, which is costly and requires typically around 20 ALU (Arithmetic Logic Unit) instructions in a GPU. Notably, only three such arctan evaluations need to be executed for formula (17). The approximated integrand $\tilde{I}(\phi,c,n)$ can then be computed. According to a second selection of the normalized peak-shape functions $P$, those are a linear combination of Lorentzian functions $P_L$ and Pearson type VII functions parameterized with a predetermined number $m$, noted $P_{Pm}$. Such a Pearson-type function is defined by:

$$P_{Pm}(\phi, c, n) = \frac{1}{(1+\beta(c,n,m)\phi^2)^m} \tag{26}$$

where $\beta$ is a parameter depending on $c$, $n$ and $m$, which specifies the function $P_{Pm}$.

More precisely, the linear combination of the peak-shape functions is an affine combination (i.e. a linear combination for which the sum of the related coefficients is 1). This amounts to having the approximated integrand $\tilde{I}(\phi,c,n)$ being an affine combination of the approximated integrands $\tilde{I_L}(\phi,c,n)$ and $\tilde{I_{Pm}}(\phi,c,n)$ corresponding respectively to the Lorentzian and Pearson peak-shape functions (though the coefficients are not the same for the peak-shape functions and the approximated integrands). That relation is given by:

$$\tilde{I}(\phi,c,n) = \mu \; \tilde{I_L}(\phi,c,n) + (1 - \mu) \, P_{Pm} \, \widetilde{I_{Pm}}(\phi,c,n) \qquad (27)$$

with coefficient $\mu$ being comprised between 0 and 1.

In a particular implementation, coefficient $\mu$ is computed from a further parameter derived from the integrand function $I$ (in addition to the maximum value $s$ and the half-width abscissa $x_\omega$): the value $I$ $(x_{tail},c,n)$ taken by integrand $I$ at a tail abscissa $x_{tail}$. The latter is advantageously chosen as:

$$x_{tail} = x_\omega + 0.3946 \, (1 - (1 - x_\omega)^{12}) \qquad (28)$$

Then, coefficient $\mu$ depends on $c$ and $n$, and is obtained by equalizing the values at $x_{tail}$ of the approximated integrand $\tilde{I}$ and the integrand $I$. This leads to the following value:

$$\mu \; (c,n) = \frac{\widetilde{I_{Pm}} \, (x_{tail},c,n) - I \, (x_{tail},c,n)}{\widetilde{I_{Pm}} \, (x_{tail},c,n) - \tilde{I_L} \, (x_{tail},c,n)} \qquad (29)$$

This choice proves particularly appropriate in efficient implementations, which can be explained by the fact that in the tail of the integrand, the Lorentzian approximation tends to an overestimation while the Pearson approximation tends by contrast to an underestimation. The present weighting therefore provides a relative balance between both.

In a similar way as for the Lorentzian function, the parameter $\beta$ is computed by t by using the approximated half-width abscissa $x_\omega$, as well as an offset $bias_m$, which depends on $c$, $n$ and $m$:

$$P_{Pm} \, ( \, x_\omega + bias_m, \, c, \, n) = \frac{I \, (x_\omega,c,n)}{s}$$

so that:

$$\beta \; (c,n,m) = \frac{s - \sqrt[m]{I(x_\omega,c,n)}}{\sqrt[m]{I(x_\omega,c,n)}.(x_\omega + bias)^2} \qquad (30)$$

Two particular values of parameter $m$ in the Pearson function provide advantageous embodiments: 1.5 and 2. For both of them, relatively simple antiderivatives expressions are known (arguments $c$ and $n$ being omitted in the functions for sake of conciseness):

$$\int P_{P1.5} \, (\phi) = \frac{\phi}{\sqrt{\beta \, \phi^2 + 1}} \qquad (31)$$

$$\int P_{P2} \, (\phi) = \frac{1}{2} \, (\frac{\phi}{\beta \, \phi^2 + 1} + \frac{\arctan{(\sqrt{\beta} \, \phi)}}{\sqrt{\beta}}) \qquad (32)$$

The integral for $m = 1.5$ is simpler to evaluate, while the integral for $m = 2$ provides slightly more accurate estimations of the radiance.

Like for the Lorentzian function, the value of $bias_m$ depends on the selection of the triple-peak or single-peak formula. For the triple-peak (sophisticated solution), it appears appropriate to select the following values:

$$bias_{1.5} = 0.1047 \, (\exp{(2.1 \, ((\frac{4x_\omega}{\pi})^{3.4})} - 1) \qquad (33)$$

$$bias_2 = 0.0963 \ (\exp \ (2.1 \ ((\tfrac{4x_\omega}{\pi})^4) - 1) \qquad\qquad (34)$$

and for the single-peak (simpler solution):

$$bias_{1.5} = 0.3391 \ (\exp \ (0.5 \ ((\tfrac{4x_\omega}{\pi})^{3.9}) - 1) \qquad\qquad (35)$$

$$bias_2 = 0.3497 \ (\exp \ (0.4 \ ((\tfrac{4x_\omega}{\pi})^{4.5}) - 1) \qquad\qquad (36)$$

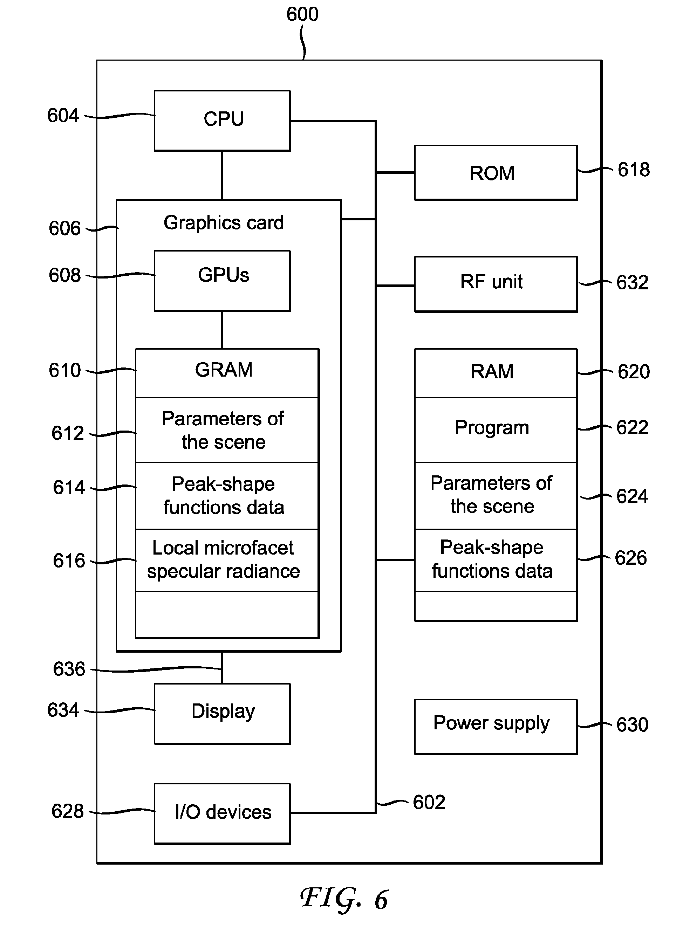

FIGURE 6 depicts an apparatus 600 in accordance with the present principles for carrying out rendering by establishing local microfacet specular radiation in accordance with the present principles. The apparatus 600 includes various elements, connected to each other by a bus 602 that carries addresses, data and a clock signal from a clock (not shown). The apparatus includes a microprocessor 604 (which bears the designation "CPU") for controlling various elements in the apparatus. The microprocessor 604 connects via the bus 602 to graphics circuitry 606 (identified as a graphics card in FIG. 6.). The graphics circuitry comprising several Graphical Processor Units (or GPUs) 608 for performing various operations in parallel, as well as a Graphical Random Access Memory (GRAM) 610. The GRAM 610 has a plurality of registers, illustratively depicted by registers, 612, 614, and 616 that store (1) parameters representative of the scene in the image, (2) peak-shape function data, and (3) local radiance information computed within a frame during rendering, respectively. In addition to the GRAM 610, the apparatus 600 includes a non-volatile memory of ROM (Read Only Memory) 618 and a Random Access Memory or RAM 620, both coupled to the microprocessor 604 via the bus 602. The random access memory 620 has a plurality of registers, including registers 622, 624, and 626, which store (1) an operating program for the microprocessor 602, (2) parameters representative of a scene in the image (for example modelling parameters of the object(s) of the scene and lighting parameters of the scene); and (3) peak-shape functions data exploited for establishing the radiance, respectively. Upon power up of the apparatus 600, the microprocessor 602 will load and executes the instructions of the program in the register 622 of the RAM 620.

The algorithms implementing the steps of the method of the present principles are stored in the memory GRAM 610 of the graphics card 606 associated with the apparatus 600. Upon power up of the apparatus 600, the RAM 620 loads the scene parameters in its register 624 and the peak-shape functions data in the register 626. Thereafter, the RAM 620 loads these parameters into the registers 612 and 624 of the GRAM 610 for execution by the GPS 608 via algorithms in the form of microprograms of "shader" type using HLSL (High Level Shader Language) language or GLSL (OpenGL Shading Language) for example.

According to a variant, at least some of the data pertaining to primitives are stored in the RAM 620 and processed by the microprocessor 602. This variant however causes greater latency time in the composition of an image comprising a representation of the environment composed from microprograms contained in the GPUs 608 as the data undergoes transmission from the graphics card 606 to the RAM 620 via the bus 604. The bus 604 generally has the transmission capacities inferior to those available in the graphics card 606 for transmission of data from the GPUs 608 to the GRAM 610 and vice-versa.

The apparatus 600 typically includes one or more I/O (Input/Output) devices 628 such as for example a keyboard, a mouse, a joystick, a webcam, and other input modalities, such as voice recognition. The apparatus also includes a power supply 630 for powering various elements. The power supply 630 can reside within the apparatus 600 or lie external thereto. A radio frequency transceiver 632 within the apparatus 600 provides a wireless connection via one of a variety of protocols (WiFi, Bluetooth, Cellular and the like) for receiving and transmitting information to other devices and systems.

Further, the apparatus 600 comprises a display device 634 (e.g., a monitor) directly coupled to the graphics card 606 via a bus 636 to display synthesized images calculated and composed in the graphics card, for example live. The use of a dedicated bus 636 to connect the display device 634 to the graphics card 606 offers the advantage of much higher data transmission bitrates and thus reducing the latency time for the displaying of images composed by the graphics card. According to a variant, the display device 644 could lie is external to the apparatus 600 and make use of a cable or wireless connection for receiving display signals. For example, the display device 634 could take the form of an LCD or plasma screen or a video-protector. In this respect, the RF unit 632 would operate to transmit display signals to the display device.

As used herein, the term "register" can include a memory zone of low capacity (some binary data) as well as a memory zone of large capacity (enabling storage of whole programs) to be stored or all or part of the data representative of data calculated or to be displayed). Further, the registers need not lie adjacent to each other and can exist as distributed locations in which one register includes several smaller registers.

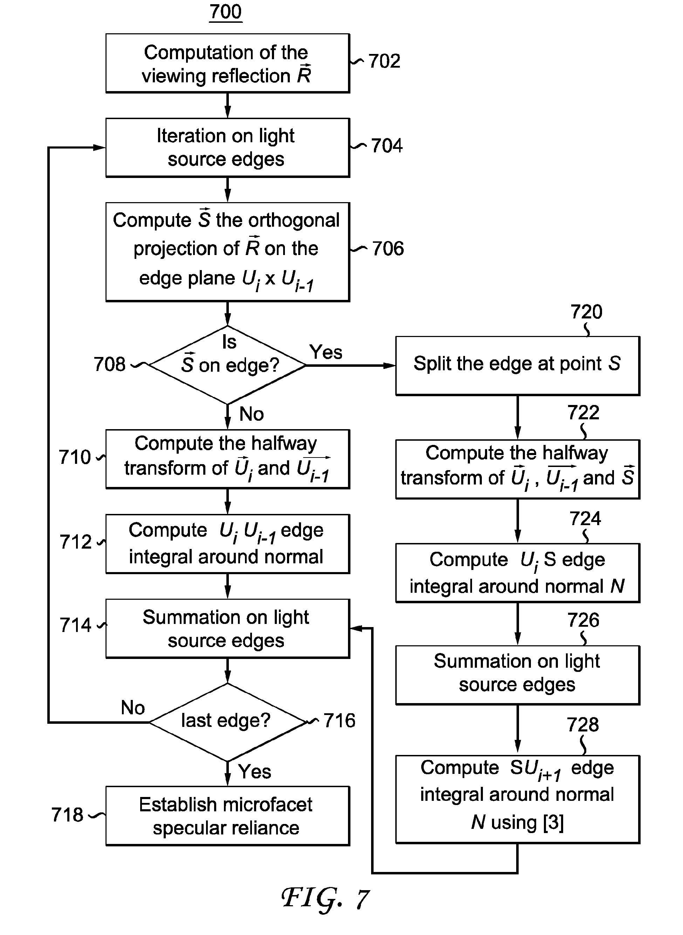

FIGURE 7 depicts in flow chart form the steps of a process 700 for establishing the microfacet specular radiance in accordance with the present principles. The process begins with computing the viewing reflection vector $\vec{R}$ during step 702. Thereafter, step 704 undergoes execution and begins an iteration loop on each of the light sources edges. Following step 704, step 706 is executed to compute $\vec{S}$ the orthogonal projection of $\vec{R}$ on the edge plane $U_i \times U_{i+1}$. Thereafter, a check occurs during step 708 to determine if S lies on an edge. If so, then the process continues to step 710 to compute the halfway transform of $\overrightarrow{U_\tau}$ and $\overrightarrow{U_{\tau+1}}$. Next, step 712 is executed to compute the $U_i U_{i+1}$ edge integral around the normal. The integral is summed on the light source edges during step 714. Thereafter, a check occurs during step 716 whether the edge is the last edge. If so, then the microfacet radiation is established using the technique from EP Patent Application 15305229.5 described above. If more edges exist, then the process reverts to step 704. During step 708, the projection S may not lie on the edge. If so, then step 720 undergoes execution and the edge undergoes splitting at the point S. Step 722 is executed next to compute the halfway transform of $\overrightarrow{U_\tau}$, $\overrightarrow{U_{\tau+1}}$ and $\vec{S}$. Step 724 follows during which computation of $U_i S$ edge integral around normal N occurs. Summation of the integrals on the light source edges occurs during step 726, followed by step 728 and computation of the $SU_{i+1}$ edge integrals around the normal using the technique from EP Patent Application 15305229.5 described previously. After step 728, the process reverts to step 716.

After establishing the microfacet specular radiance, rendering occurs in much the same manner as described in EP Patent Application 15305229.5. Exploited inputs include geometrical data and light property data and peak-shape functions data. The latter data can comprise the type of used peak-shape function(s), such as notably Lorentzian or combined Lorentzian-Person, the corresponding associated parameters, such as $m$ for a Pearson function, and the way of exploitation, such as the triple-peak or single-peak method developed above.

A next pixel or view sample is considered - which is advantageously processed in parallel for various pixels. A next surface point M is also processed for the current pixel, in compliance with known rendering processes. The local radiance at point M for the considered pixel, which is associated with a viewing direction, is then computed laid out above and summed up hereinafter. Further surface points and further pixels are dealt with until the whole set has been processed, and the complete rendering output is available which is reiterated for moving images.

The graphics processors 608 can perform several of the steps of FIG 7 in parallel, thereby increasing efficiency.

The rendering technique of the present principles affords the folloiwng advantages:

- Simple and efficient rendering physically plausible specular surfaces lit by area lights;
- Consistent with the microfacet theory, widely use in VFX, animations and game industry;
- Small computational overhead;
- Easy implementation on parallel architectures and graphics hardware;.
- Fast solution suitable for real-time rendering; and
- Easy implementation on production renderers or game engines.

**Claims**

1. A method for real-time rendering of illuminated specular surfaces, comprising:

establishing a viewing reflection vector $\vec{R}$ associated with an image to be rendered;
for each edge $U_i$, establishing a local radiance by (a) establishing a normalized projection of a single point $S$ of the viewing reflection vector $R$ onto a plane defined by edge $U_i U_{i+1}$; (702) (b) determining if the single point $S$ lies inside edge $U_i U_{i+1}$, (706, 708) and if so, (c) performing a halfway transform of $U_i$, $S$ and $U_{i+1}$; (710) and (d) performing an edge integral is performed on $U_i$, $S$ and $S$, $U_{i+1}$ to establish radiance; (712)
interating over all edges (704, 716);
summing the local radiance for all edges (714); and
rendering the specular surfaces in accordance with the established radiance (718).

2. The method according to claim 1 wherein if S does not lie inside $U_i U_{i+1}$ then performing a halfway transform of $U_i$ and $U_{i+1}$ and evaluate the edge integral $U_i$, $U_{i+1}$ in place of performing a halfway transform of $U_i$, $S$ and $U_{i+1}$; and performing an edge integral is performed on $U_i$, $S$ and $S$, $U_{i+1}$2.

3. The method according to claim 1 or 2 wherein the halfway transform yield a stationary inflection aligned with a viewing direction.

4.  Apparatus (600) for real-time rendering of illuminated specular surfaces, comprising
    a memory for storing data and program instructions (610, 618, 620);
    a graphical circuitry (606)configured to (1) establish a viewing reflection vector $\vec{R}$ associated with an image to be rendered; (2) for each edge $U_i$, establish a local radiance by (a) establishing a normalized projection of a single point $S$ of the viewing reflection vector $R$ onto a plane defined by edge $U_iU_{i+1}$; (702) (b) determine if the single point $S$ lies inside edge $U_iU_{i+1}$, (706, 708) and if so, (c) perform a halfway transform of $U_i$, $S$ and $U_{i+1}$; (710) and (d) perform an edge integral is performed on $U_i$, $S$ and $S$, $U_{i+1}$ to establish radiance; (712) (3) iterate over all edges (704, 716); (4) sum the local radiance for all edges (714); and (5) render the specular surfaces in accordance with the established radiance (718);
    a microprocessor (604) for controlling the graphical circuitry; and
    a bus (602) for interconnecting the memory, graphical circuitry and the microprocessor.

5.  The apparatus according to claim 4 wherein if $S$ does not lie inside $U_iU_{i+1}$, the graphical circuitry performs a halfway transform of $U_i$ and $U_{i+1}$ and evaluate the edge integral $U_i$, $U_{i+1}$ in place of performing a halfway transform of $U_i$, $S$ and $U_{i+1}$; and performing an edge integral is performed on $U_i$, $S$ and $S$, $U_{i+1}$.

6.  The apparatus according to claim 4 or 5 wherein the halfway transform yield a stationary inflection aligned with a viewing direction.

Phong model: $(\vec{R} \cdot \vec{L})^{\alpha}$

*FIG. 1*

Blinn-Phong model: $(\vec{N} \cdot \vec{H})^{\alpha}$

$$\vec{H} = \frac{\vec{L} + \vec{V}}{\|\vec{L} + \vec{V}\|}$$

*FIG. 2*

FIG. 3

FIG. 4

FIG. 5

600

604 — CPU

606 — Graphics card

608 — GPUs

610 — GRAM

612 — Parameters of the scene

614 — Peak-shape functions data

616 — Local microfacet specular radiance

636 —

634 — Display

628 — I/O devices

618 — ROM

632 — RF unit

620 — RAM

622 — Program

624 — Parameters of the scene

626 — Peak-shape functions data

630 — Power supply

602

*FIG. 6*

## 700

Computation of the viewing reflection $\vec{R}$ — 702

↓

Iteration on light source edges — 704

↓

Compute $\vec{S}$ the orthogonal projection of $\vec{R}$ on the edge plane $U_i \times U_{i-1}$ — 706

↓

708 — Is $\vec{S}$ on edge? → **Yes** → Split the edge at point $S$ — 720

**No** ↓

710 — Compute the halfway transform of $\vec{U}_i$ and $\overrightarrow{U_{i-1}}$

↓

712 — Compute $U_i U_{i-1}$ edge integral around normal

↓

714 — Summation on light source edges

↓

**No** ← last edge? — 716

**Yes** ↓

718 — Establish microfacet specular reliance

720 → 722 — Compute the halfway transform of $\vec{U}_i$, $\overrightarrow{U_{i-1}}$ and $\vec{S}$

↓

724 — Compute $U_i S$ edge integral around normal $N$

↓

726 — Summation on light source edges

↓

728 — Compute $S U_{i+1}$ edge integral around normal $N$ using [3]

*FIG. 7*

Europäisches
Patentamt

European
Patent Office

Office européen
des brevets

# EUROPEAN SEARCH REPORT

Application Number

EP 15 30 6284

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Pascal Lecocq, Gaël Sourimant, Jean-Eudes Marvie: "Accurate Approximations For Real-Time Specular Area Lighting", ACM SIGGRAPH 2015 Talks, 31 July 2015 (2015-07-31), pages 1-1, XP002756261, DOI: 10.1145/2775280.2792522 ISBN: 9781450336369 Retrieved from the Internet: URL:http://pascal.lecocq.home.free.fr/publications/Lecocq15_AreaLights_SiggTalk.pdf [retrieved on 2016-04-06] * the whole document * ----- | 1-6 | INV.<br>G06T15/50<br>G06T15/80 |

TECHNICAL FIELDS
SEARCHED      (IPC)

G06T

The present search report has been drawn up for all claims

| Place of search | Date of completion of the search | Examiner |
|---|---|---|
| Berlin | 11 April 2016 | dos Santos, Luís |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 15305229 A

### Non-patent literature cited in the description

- **JAMES ARVO.** Applications of Irradiance Tensors to the Simulation of Non-Lambertian Phenomena. *Computer Graphics Proceedings, Annual Conference Series, ACM SIGGRAPH,* 1995
- **ROBERT R. LEWIS.** Making Shaders More Physically Plausible. *Fourth Eurographics Workshop on Rendering,* 1994, 47-62
- **ERIC P. LAFORTUNE ; YVES D. WILLEMS.** Using the Modified Phong Reflectance Model for Physically Based rendering. *Technical Report RP-CW-197,* 1994